# EUROPEAN PATENT SPECIFICATION

(11) **EP 3 411 997 B1**
(45) Date of publication and mention of the grant of the patent: **11.09.2024**
(21) Application number: 17748262.7
(22) Date of filing: 03.02.2017
(51) Int. Cl.: H04L 5/00, H04L 1/00, H04W 24/10, H04B 7/06, H04W 72/00, H04L 1/06

(54) **MULTI-SHOT APERIODIC CHANNEL STATE INFORMATION REPORT FOR FULL DIMENSION-MULTIPLE INPUT MULTIPLE OUTPUT SYSTEMS**
MEHRFACHER APERIODISCHER KANALSTATUSINFORMATIONSBERICHT FÜR FULL-DIMENSION-MIMO-SYSTEME
RAPPORT D'INFORMATIONS D'ÉTAT DE CANAL APÉRIODIQUE MULTIPLE POUR DES SYSTÈMES À ENTRÉES MULTIPLES, SORTIES MULTIPLES GLOBAUX

(30) Priority: 03.02.2016 US 201662290627 P
(43) Date of publication of application: 12.12.2018
(73) Proprietor: Apple Inc., Cupertino, CA 95014 (US)
(72) Inventor: DAVYDOV, Alexei, Nizhny Novgorod 603132 (RU); SERGEEV, Victor, Nizhny Novgorod, Arzamas 607220 (RU); LEE, Wook Bong, San Jose, CA 95130 (US)
(74) Representative: Lang, Johannes
(86) International application number: PCT/US2017/016479
(87) International publication number: WO 2017/136706

(56) References cited:
- EP-A1- 2 547 139
- WO-A1-2015/163709
- US-A1- 2011 249 578
- US-A1- 2015 003 359
- US-A1- 2015 016 388
- US-A1- 2015 146 634
- US-A1- 2015 195 830
- ZTE: "Specification Impacts of Beamformed CSI-RS Configuration", vol. RAN WG1, no. Beijing, China; 20150824 - 20150828, 23 August 2015 (2015-08-23), XP051001956, Retrieved from the Internet <URL:http://www.3gpp.org/ftp/Meetings_3GPP_SYNC/RAN1/Docs/> [retrieved on 20150823]
- ITRI: "CSI Reporting for FD-MIMO", vol. RAN WG1, no. Anaheim, USA; 20151115 - 20151122, 15 November 2015 (2015-11-15), XP051003376, Retrieved from the Internet <URL:http://www.3gpp.org/ftp/Meetings_3GPP_SYNC/RAN1/Docs/> [retrieved on 20151115]
- QUALCOMM INC: "Remaining details on measurement restriction for FD-MIMO", vol. RAN WG1, no. Anaheim, USA; 20151115 - 20151122, 15 November 2015 (2015-11-15), XP051039992, Retrieved from the Internet <URL:http://www.3gpp.org/ftp/Meetings_3GPP_SYNC/RAN1/Docs/> [retrieved on 20151115]

## Description

### CROSS REFERENCE TO RELATED APPLICATIONS

This application claims the benefit of priority to United States Provisional Patent Application Serial No. 62/290,627, filed February 3, 2016 and entitled "MULTI-SHOT APERIODIC CHANNEL STATE INFORMATION REPORT FOR FULL DIMENSION-MULTIPLE INPUT MULTIPLE OUTPUT SYSTEMS".

### TECHNICAL FIELD

This application relates to radio access networks and, in particular, to apparatus for determining channel state information by requesting multiple aperiodic channel state information (CSI) reports.

### BACKGROUND

Wireless communication systems send and receive data at increasing rates using a variety of transmission modes, encoding techniques and modulation schemes. These communication systems employ multiple antennas and modulation schemes such as quadrature amplitude modulation (QAM) as well as transmission techniques such as carrier aggregation (CA) and orthogonal frequency division multiple access (OFDMA). The systems support downlink data rates and upload data rates greater than one gigabit per second (1 Gbit/s). The communication systems may be used to send a small number of high-data rate communications or a larger number of lower data rate communications. The peak rates assume channels having minimal noise and interference. Wireless channels, however, are subject to noise, multipath fading, inter-symbol interference, Doppler shifts due to mobile user equipment (UE) and other noise or distortion sources.

The communications standards include a number of encoding techniques for overcoming noise and distortion in a channel. These include encoding the data with a forward error correction (FEC), and employing a hybrid automatic repeat request (HARQ) acknowledgement (ACK) scheme to resend corrupted data.

The status of the channel or channels used to transmit data may change rapidly, especially for mobile UEs. It is desirable for a base station, such as an evolved Node B (eNB) or generation Node B (gNB) to be able to rapidly and continually determine channel status for a number of channels in order to determine which channels to use and what type of encoding and transmission techniques to use on each of the channels so that the data in each channel is transmitted in a way that compensates for the status of the channels.

### BRIEF DESCRIPTION OF THE DRAWINGS

FIG. 1 is a block diagram of an example wireless communication system in accordance with some embodiments.
FIG. 2 is a block diagram of an example base station and UE in accordance with some embodiments.
FIG. 3A is a data diagram illustrating the structure of a wireless frame in accordance with some embodiments.
FIG. 3B is a data diagram illustrating the structure of a sequence of wireless resource blocks in accordance with some embodiments.
FIGs. 4A and 4B are data diagrams illustrating the structure of example downlink control information (DCI) in accordance with some embodiments.
FIGs. 5, 6 and 7 are signalling charts showing communications between an example base station and an example UE in accordance with some embodiments.
The document by ZTE, "Specification Impacts of Beamformed CSI-RS Configuration", 3GPP draft R1-154743, August 23, 2015, discusses the specification impacts of beamformed CSI-RS configuration.
US 2011/249578 A1 relates to channel state information being reported in periodic and aperiodic reports for multiple component carriers or serving cells. Channel state information may be reported for a subset of aggregated downlink carriers or serving cells. For an aperiodic report, the carrier(s)/serving cell(s) for which channel state information is reported are determined based on the request for the aperiodic report. When a CQI/PMI/RI report and a HARQ ACK/NACK report coincide in a subframe, the HARQ ACK/NACK report is transmitted on PUCCH, and the CQI/PMI/RI report is transmitted on PUSCH.

### Summary of invention

The invention is defined by the independent claims. Preferred embodiments of the invention are stipulated in the dependent claims.

### DESCRIPTION OF EMBODIMENTS

The following detailed description refers to the accompanying drawings. The same reference numbers may be used in different drawings to identify the same or similar elements. In the following description, for purposes of explanation and not limitation, specific details are set forth such as particular structures, architectures, interfaces, techniques, etc. in order to provide a thorough understanding of the various aspects of various embodiments. However, it will be apparent to those skilled in the art having the benefit of the present disclosure that the various aspects of the various embodiments may be practiced in other examples that depart from these specific details. In certain instances, descriptions of well-known devices, circuits, and methods are omitted so as not to obscure the description of the various embodiments with unnecessary detail.

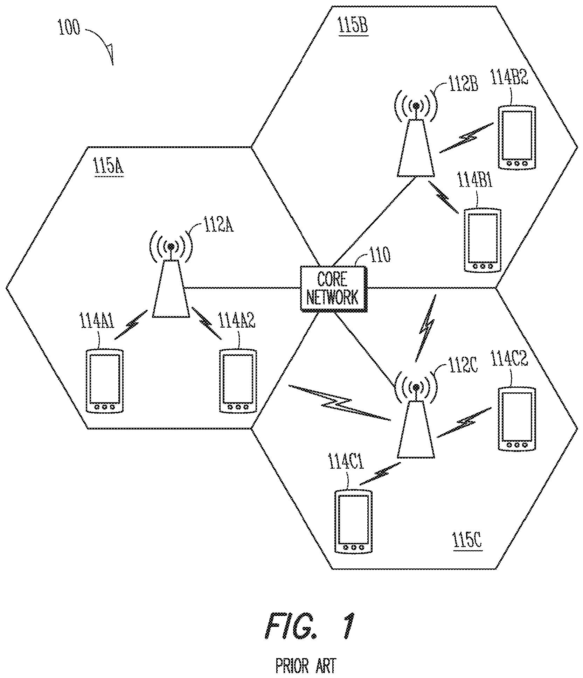

FIG. 1 shows a wireless communication system 100 that includes a core network 110 which controls a number of base stations, for example, base stations 112A, 112B and 112C. The base stations, in turn, provides communications services to one or more user equipment (UE) 114A1, 114A2, 114B1, 114B2, 114C1 and 114C2 in respective geographical areas 115A, 115B and 115C. The geographical areas are known as cells and the cell serving a particular UE is known as the serving cell for that UE. Each cell, in turn, may be divided into a plurality of sectors. In a multiple-input multiple-output (MIMO) or multiple-input single-output (MISO) system, UEs in different sectors may be served individually using beam forming techniques that define a matrix of spatially multiplexed channels. While a base station generally provides communication services to UE in its serving cell, it may also provide services to UE in one or more neighboring cells. As shown in FIG. 1, for example, the base station 112C provides communication services to the UE 114C1 in cell 115C as well as to UE 114A2 in cell 115A. Conversely, a base station may provide multiple transmission points to a UE.

The communication system 100 may include, without limitation, an evolved universal terrestrial radio access network (EUTRAN) and/or other wireless metropolitan area networks (WMAN), a wireless local area network (WLAN) or a wireless personal area network (WPAN). The network 100 may be compatible with one or more wireless communication protocols including, without limitation Institute of Electrical and Electronic Engineers (IEEE) 802.16 wireless technology (WiMax), IEEE 802.15 wireless technology (ZigBee), IEEE 802.11 wireless technology (WiFi) including IEEE 802.11ad, which operates in the 60 GHz millimeter wave spectrum, various other wireless technologies such as global system for mobile communications (GSM), enhanced data rates for GSM evolution (EDGE), GSM EDGE radio access network (GERAN), universal mobile telecommunications system (UMTS), UMTS terrestrial radio access network (UTRAN), or other 2G, 3G, 4G, 5G, etc. technologies either already developed or to be developed.

The base stations 112 may be, for example, fixed stations that communicate with one or more UEs 114 which belong to a service defined by the core network 110. A base station, also known as a base transceiver station (BTS) may be an evolved Node B (eNB), a generation Node B (gNB), a macrocell, microcell, picocell or femtocell. One or more of the base stations 112 may also be wireless access points.

The UE 114 may be a mobile device or a fixed device that operates according to a mobile protocol. The UE 114 may include, without limitation, a tablet computer, a wearable computer such as a smart watch or head-mounted display, a personal digital assistant (PDA), a game console, a portable media player, a mobile telephone and/or a smart phone.

Communications sent from the base station 112 to the UE 114 are referred to as downlink (DL) communications while communications sent from the UE 114 to the base station 112 are referred to as uplink (UL) communications. The wireless communication system 100 may be a MIMO system having multiple transmit antennas and multiple receive antennas or a MISO system having multiple transmit antennas and a single receive antenna. The multiple antennas may be coupled to the base station and/or the UE. The system 100 may also be a single input, single output (SISO) system having a single transmit antenna and a single receive antenna.

The example communication system may use between one and five frequency bands having bandwidths of 1.4MHz, 3MHz, 5MHz, 10MHz, 15MHz, 20MHz or more than 20MHz. Furthermore, the communication system may perform carrier aggregation (CA) in which multiple carriers may be aggregated to send a single data stream. As many as 32 carriers can be aggregated in CA.

As used herein, the term "circuitry" may refer to, be part of, or include a core processor, a digital signal processor (DSP), a field-programmable gate array (FPGA), an Application Specific Integrated Circuit (ASIC), a programmable logic device (PLD) an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

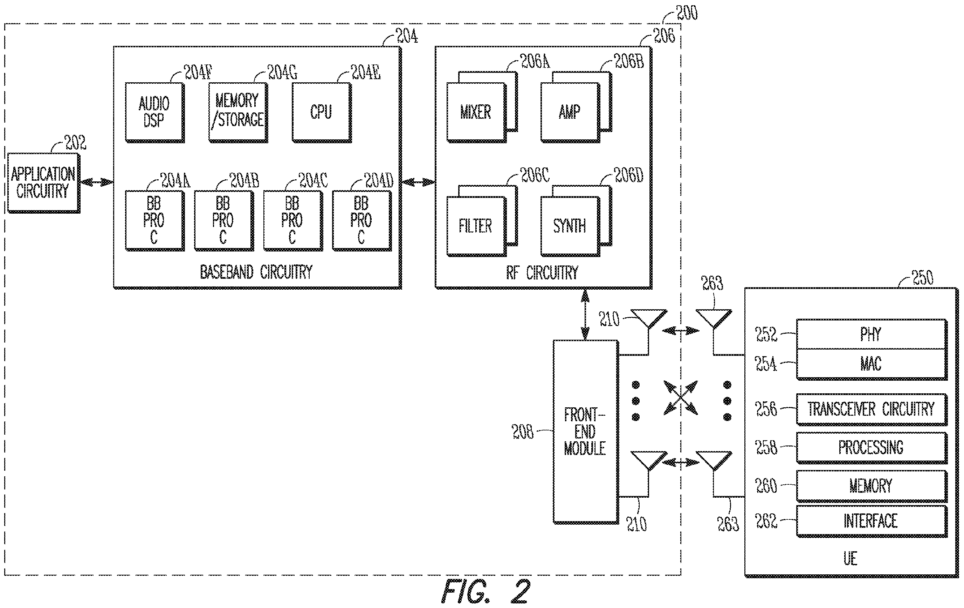

Embodiments described herein may be implemented in a system using any suitably configured hardware and/or software. FIG. 2 illustrates, for one embodiment, example components of two electronic devices 200 and 250. In embodiments, the electronic device 200 may be incorporated into, or otherwise be a part of an eNB or gNB, or some other suitable electronic device. Electronic device 250 may be incorporated into or otherwise a part of a UE. In some embodiments, the electronic device 200 may include application circuitry 202, baseband circuitry 204, Radio Frequency (RF) circuitry 206, front-end module (FEM) circuitry 208 and one or more antennas 210, coupled together at least as shown.

The application circuitry 202 may include one or more application processors. For example, the application circuitry 202 may include circuitry such as, but not limited to, one or more single-core or multi-core processors (not separately shown). The processor(s) may include any combination of general-purpose processors and dedicated processors (e.g., graphics processors, application processors, DSPs, etc.). The processors may be coupled with and/or may include memory/storage and may be configured to execute instructions stored in the memory/storage to enable various applications and/or operating systems to run on the system.

The baseband circuitry 204 may include circuitry such as, but not limited to, one or more single-core or multi-core processors. The baseband circuitry 204 may include one or more baseband processors and/or control logic to process baseband signals received from a receive signal path of the RF circuitry 206 and to generate baseband signals for a transmit signal path of the RF circuitry 206. Baseband processing circuity 204 may interface with the application circuitry 202 for generation and processing of the baseband signals and for controlling operations of the RF circuitry 206. For example, in some embodiments, the baseband circuitry 204 may include a second generation (2G) baseband processor 204A, third generation (3G) baseband processor 204B, fourth generation (4G) baseband processor 204C, and/or other baseband processor(s) 204D for other existing generations, generations in development or to be developed in the future (e.g., fifth generation (5G), 6G, etc.).

The baseband circuitry 204 (e.g., one or more of baseband processors 204A-D) may handle various radio control functions that enable communication with one or more radio networks via the RF circuitry 206. The radio control functions may include, but are not limited to, signal modulation/demodulation, encoding/decoding, radio frequency shifting, etc. In some embodiments, modulation/demodulation circuitry of the baseband circuitry 204 may include Fast-Fourier Transform (FFT), precoding, and/or constellation mapping/demapping functionality. In some embodiments, encoding/decoding circuitry of the baseband circuitry 204 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments.

In some embodiments, the baseband circuitry 204 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 204E of the baseband circuitry 204 may be configured to run elements of the protocol stack for signalling of the PHY, MAC, RLC, PDCP and/or RRC layers. In some embodiments, the baseband circuitry may include one or more audio digital signal processor(s) (DSP) 204F. The audio DSP(s) 204F may be include elements for compression/decompression and echo cancellation and may include other suitable processing elements in other embodiments.

The baseband circuitry 204 may further include memory/storage 204G. The memory/storage 204G may be used to load and store data and/or instructions for operations performed by the processors of the baseband circuitry 204 Memory/storage for one embodiment may include any combination of suitable volatile memory and/or non-volatile memory. The memory /storage 204G may include any combination of various levels of memory /storage including, but not limited to, read-only memory (ROM) having embedded software instructions (e.g., firmware), random access memory (e.g., dynamic random access memory (DRAM)), cache, buffers, etc. The memory/storage 204G may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 204 and the application circuitry 202 may be implemented together such as, for example, on a system on a chip (SOC).

In some embodiments, the baseband circuitry 204 may provide for communication compatible with one or more radio technologies. For example, in some embodiments, the baseband circuitry 204 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 204 is configured to support radio communications of more than one wireless protocol may be referred to as multi-mode baseband circuitry.

RF circuitry 206 may enable communication with wireless networks using modulated electromagnetic radiation through a non-solid medium. In various embodiments, the RF circuitry 206 may include switches, filters, amplifiers, etc. to facilitate the communication with the wireless network. RF circuitry 206 may include one or more receive signal paths which may include circuitry to down-convert RF signals received from the FEM circuitry 208 and provide baseband signals to the baseband circuitry 204. RF circuitry 206 may also include a transmit signal path which may include circuitry to up-convert baseband signals provided by the baseband circuitry 204 and provide RF output signals to the FEM circuitry 208 for transmission.

In some embodiments, the RF circuitry 206 may include a one or more receive signal paths and transmit signal paths. The receive signal path of the RF circuitry 206 may include mixer circuitry 206A, amplifier circuitry 206B and filter circuitry 206C. The transmit signal path of the RF circuitry 106 may include filter circuitry 206C and mixer circuitry 206A. RF circuitry 206 may also include synthesizer circuitry 206D for synthesizing a frequency for use by the mixer circuitry 206A of the receive signal path and the transmit signal path. In some embodiments, the mixer circuitry 206A of the receive signal path may be configured to down-convert RF signals received from the FEM circuitry 208 based on the synthesized frequency provided by synthesizer circuitry 206D. The amplifier circuitry 206B may be configured to amplify the down-converted signals and the filter circuitry 206C may be a low-pass filter (LPF) or band-pass filter (BPF) configured to remove unwanted signals from the down-converted signals to generate output baseband signals. Output baseband signals may be provided to the baseband circuitry 204 for further processing. In some embodiments, the output baseband signals may be, without limitation, low intermediate frequency (LIF), very low intermediate frequency (VLIF) or zero-frequency baseband signals. In some embodiments, mixer circuitry 206A of the receive signal path may comprise, without limitation, active or passive mixers.

In some embodiments, the mixer circuitry 206A of the transmit signal path may be configured to up-convert input baseband signals based on the synthesized frequency provided by the synthesizer circuitry 206D to generate RF output signals for the FEM circuitry 208. The baseband signals may be provided by the baseband circuitry 204 and may be filtered by filter circuitry 206C. The filter circuitry 206C may include a BPF or a high-pass filter (HPF), although the scope of the embodiments is not limited in this respect.

In some embodiments, the mixer circuitry 206A of the receive signal path and the mixer circuitry 206A of the transmit signal path may include two or more mixers and may be arranged for quadrature downconversion and/or upconversion respectively. In some embodiments, the mixer circuitry 206A of the receive signal path and the mixer circuitry 206A of the transmit signal path may include two or more mixers and may be arranged for image rejection (e.g., Hartley image rejection). In some embodiments, the mixer circuitry 206A of the receive signal path and the mixer circuitry 206A may be arranged for direct downconversion and/or direct upconversion, respectively. In some embodiments, the mixer circuitry 206A of the receive signal path and the mixer circuitry 206A of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 206 may include analog-to-digital converter (ADC) circuitry (not shown) and digital-to-analog converter (DAC) circuitry (not shown) and the baseband circuitry 204 may include a digital baseband interface to communicate with the RF circuitry 206.

In some dual-mode embodiments, separate radio IC circuitry may be provided for processing signals for each spectrum, although the scope of the embodiments is not limited in this respect.

In some embodiments, the synthesizer circuitry 206D may be a fractional-N synthesizer or a fractional N/N+1 synthesizer, although the scope of the embodiments is not limited in this respect as other types of frequency synthesizers may be suitable. For example, synthesizer circuitry 206D may be a delta-sigma synthesizer, a frequency multiplier, or a synthesizer comprising a phase-locked loop with a frequency divider.

The synthesizer circuitry 206D may be configured to synthesize an output frequency for use by the mixer circuitry 206A of the RF circuitry 206 based on a frequency input and a divider control input. In some embodiments, the synthesizer circuitry 206D may be a fractional N/N+1 synthesizer.

Synthesizer circuitry 206D of the RF circuitry 206 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+1 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, frequency input to the synthesizer 206D may be provided by a voltage controlled oscillator (VCO) (not shown), although that is not a requirement. Divider control input for the synthesizer 206D may be provided by either the baseband circuitry 204 or the applications processor 202 depending on the desired output frequency. In some embodiments, a divider control input (e.g., N) may be determined from a look-up table based on a channel indicated by the applications processor 202.

In some embodiments, synthesizer circuitry 206D may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a local oscillator (LO) frequency (fLO). In some embodiments, the RF circuitry 206 may include an IQ/polar converter.

FEM circuitry 208 may include a receive signal path that may include circuitry configured to operate on RF signals received from one or more antennas 210, amplify the received signals and provide the amplified versions of the received signals to the RF circuitry 206 for further processing. FEM circuitry 208 may also include a transmit signal path which may include circuitry configured to amplify signals for transmission provided by the RF circuitry 206 for transmission by one or more of the one or more antennas 210.

In some embodiments, the FEM circuitry 208 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 206). The transmit signal path of the FEM circuitry 208 may include a power amplifier (PA) to amplify input RF signals (e.g., provided by RF circuitry 206), and one or more filters to generate RF signals for subsequent transmission (e.g., by one or more of the one or more antennas 210).

In some embodiments, the communication device 200 may include additional elements such as, for example, memory/storage, display, camera, sensor, and/or input/output (I/O) interface as described in more detail below. In some embodiments, the communication device 200 described herein may be part of a portable wireless communication device, such as a personal digital assistant (PDA), a laptop or portable computer with wireless communication capability, a web tablet, a wireless telephone, a gaming system, a smartphone, a smart watch, wireless headset, a pager, an instant messaging device, a digital camera, an access point, a television, a medical device (e.g., a heart rate monitor, a blood pressure monitor, etc.), or other device that may receive and/or transmit information wirelessly. In some embodiments, the communication device 200 may include one or more user interfaces designed to enable user interaction with the system and/or peripheral component interfaces designed to enable peripheral component interaction with the system. For example, the communication device 2.00 may include one or more of a keyboard, a keypad, a touchpad, a display, a sensor, a non-volatile memory port, a universal serial bus (USB) port, an audio jack, a power supply interface, one or more antennas, a graphics processor, an application processor, a speaker, a microphone, and other I/O components. The display may be a liquid crystal device (LCD), electroluminescent (EL) or light emitting diode (LED) screen that may include a touch screen input device. The sensor may include a gyro sensor, an accelerometer, a proximity sensor, an ambient light sensor, and a positioning unit. The positioning unit may communicate with components of a positioning network, e.g., a global positioning system (GPS) satellite.

The antennas 210 may comprise one or more directional or omnidirectional antennas, including, for example, dipole antennas, monopole antennas, patch antennas, loop antennas, microstrip antennas, fractal antennas or other types of antennas suitable for transmission of RF signals. In some MIMO or MISO embodiments, the antennas 210 may be effectively separated and/or polarized to take advantage of spatial diversity and the different channel characteristics among the different transmission points of the base station to implement multi-layer communication. Alternatively, or in addition, the antennas 210 may be configured in a beam-forming array to direct a transmitted beam toward a particular UE to implement spatial multiplexing and/or spatial diversity and/or to determine the angle of arrival (AoA) of a signal received from a UE.

Although the communication device 200 is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), programmable logic devices (PLDs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

Embodiments may be implemented in one or a combination of hardware, firmware and software. Embodiments may also be implemented as instructions stored on a computer-readable storage device, which may be read and executed by at least one processor to perform the operations described herein. A computer-readable storage device may include any non-transitory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media, including optical storage media. Some embodiments may include one or more processors and may be configured with instructions stored on a computer-readable storage device.

As described above, although the circuitry used by device 200 is described as implementing a base station, such as an eNB/gNB, similar circuitry may be used to implement a UE. FIG. 2 includes a block diagram of an example UE communication device 250 in accordance with some embodiments. The device may be a UE, for example, such as any of the UEs 114 shown in FIG. 1. The physical layer circuitry 252 may perform various encoding and decoding functions that may include formation of baseband signals for transmission and decoding of received signals. The communication device 250 may also include media access control (MAC) layer circuitry 254 for controlling access to the wireless medium. The communication device 250 may further include processing circuitry 258, such as one or more single-core or multi-core processors, and memory 260 arranged to perform the operations described herein. The physical layer circuitry 252, MAC circuitry 254, transceiver circuitry 256, processing circuitry 258, memory 260 and interface circuitry 262 may be the same as the base station circuitry 200, described above, and may handle various radio control functions that enable communication with one or more radio networks compatible with one or more radio technologies. The radio control functions may include signal modulation, encoding, decoding, radio frequency shifting, etc.

For example, similar to the device 200 shown in FIG. 2, in some embodiments, communication may be enabled with one or more of a WMAN, a WLAN, and aWPAN. In some embodiments, the communication device 250 can be configured to operate in accordance with 3GPP standards or other protocols or standards, including ZigBee, WiMax, Wi-Fi, WiGig, GSM, EDGE, GERAN, UMTS, UTRAN, or other 3G, 3G, 4G, 5G, etc. technologies either already developed or to be developed. The communication device 250 may include transceiver circuitry 256 to enable communication with other external devices wirelessly and interfaces 262 to enable wired communication (including optical fiber communication) with other external devices. As another example, the transceiver circuitry 262 may perform various transmission and reception functions such as conversion of signals between a baseband range and a Radio Frequency (RF) range.

The example UE device 250 may also include antennas 263 that may comprise one or more directional or omnidirectional antennas, including, for example, dipole antennas, monopole antennas, patch antennas, loop antennas, microstrip, fractal antennas or other types of antennas suitable for transmission of RF signals. In some MIMO embodiments, the antennas 263 may be effectively separated anchor polarized to take advantage of spatial diversity and the different channel characteristics among the different transmission points of the base station to support multi-layer communication. Alternatively, or in addition, the antennas 263 may be configured in a beam-forming array to direct a transmitted beam toward a particular base station and/or to determine the angle of arrival (AoA) of a signal received from a base station.

Although the communication device 250 is illustrated as having several separate functional elements, one or more of the functional elements may be combined and may be implemented by combinations of software-configured elements, such as processing elements including DSPs, and/or other hardware elements. For example, some elements may comprise one or more microprocessors, DSPs, FPGAs, PLDs, ASICs, RFICs and combinations of various hardware and logic circuitry for performing at least the functions described herein. In some embodiments, the functional elements may refer to one or more processes operating on one or more processing elements. Embodiments may be implemented in one or a combination of hardware, firmware and software. Embodiments may also be implemented as instructions stored on a computer-readable storage device, which may be read and executed by at least one processor to perform the operations described herein.

In embodiments where the electronic device 200 and/or 250 is, implements, is incorporated into, or is otherwise part of a UE, the physical layer circuitry 252 and MAC layer circuitry 254 may be configured to determine, based on one or more signals received from an eNB/gNB, whether multi-shot aperiodic channel state information (CSI) reporting is configured for the UE. Transceiver circuitry 256 may be configured to receive an aperiodic CSI request which is processed in the physical layer circuitry 252, where the aperiodic CSI request is to trigger the multi-shot aperiodic CSI reporting by the UE and insert and encode multiple aperiodic CSI reports into the PUCCH or PUSCH for transmission to the base station in response to the aperiodic CSI request.

In embodiments where the electronic device 200 and/or 250 is, implements, is incorporated into, or is otherwise part of a base station, the baseband circuitry 204 may be configured to determine whether a user equipment (UE) should be configured for an aperiodic channel state information (CSI) reporting process. The application circuitry 202 may send a message, via the RF circuitry 206, to configure the UE to send multiple aperiodic CSI reports and, then, may send a CSI request as a part of a channel control message, for example, downlink control information (DCI), to trigger the multi-shot aperiodic CSI reporting by the UE. The application circuitry 202 may also process the received multi-shot aperiodic CSI reports to cause the base station to reconfigure its communications with the UE to compensate for the reported channel conditions.

As shown in FIG. 1, each base station 112 may communicate with UEs in the serving cell 115 of the base station as well as with UEs in neighboring cells. Conversely, using coordinated multipoint (CoMP), a UE may communicate with multiple base stations. At any given time, each base station has a number of communications in process. The status of a channel used to communicate with one or more UE may change quickly, especially for mobile UE. Thus, it is beneficial for each base station 112 to be able to quickly determine any change in channel status so that the base station 112 may dynamically adjust the channels used, the bandwidth of the channels as well as encoding, modulation and transmission techniques used on the channels to ensure that the most important data is transmitted in a way to reduce reception errors and otherwise increase throughput.

In order to determine the status of data channels between the base stations 112 and the UEs 114, Long Term Evolution Advanced (LTE-A) supports two types of CSI - periodic and aperiodic. Periodic CSI reporting is mainly used to indicate current encoding and modulation techniques being used as well as channel status of the downlink channel at the UE on a relatively long-term basis. Periodic CSI reports are provided by the UE in accordance with a predefined reporting time schedule configured by a serving base station or serving eNB/gNB using a resource control message sent via higher layer signalling (e.g., radio resource control (RRC) signalling and the like). Periodic CSI reporting usually has relatively low overhead. By contrast, in one embodiment, multi-shot aperiodic CSI reporting may be used to provide relatively large and relatively more detailed reporting in a multiple reporting instances based on one dynamic CSI request triggered by the serving cell/serving eNB/gNB using the one CSI request sent in a channel control message, for example in DCI of a physical downlink control channel (PDCCH) or in a media access control (MAC) control element (CE).

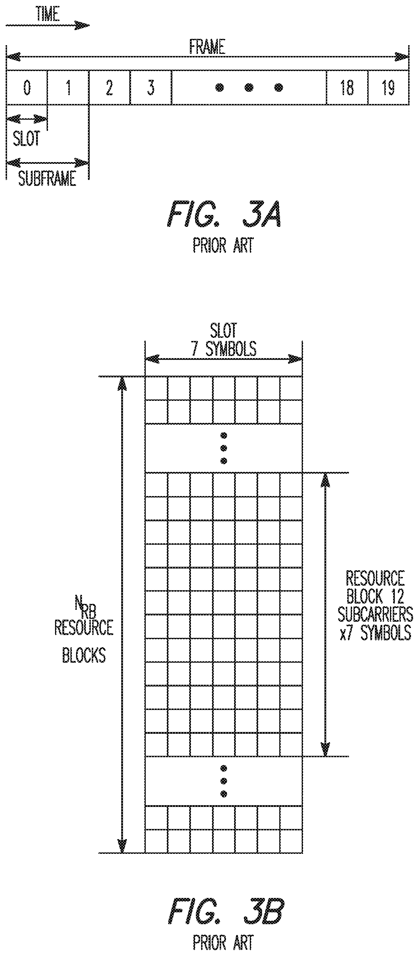

FIGs. 3A and 3B are data diagrams that illustrate the structure of a down link (DL) data frame. As shown in FIG. 3A, each frame includes 20 subframes and each sub-frame includes two slots. FIG. 3B illustrates the structure of a slot. Each slot includes seven symbols in the time domain, where each symbol includes a number, M, modulated subcarriers in the frequency domain. The modulated subcarriers in a slot are divided into resource blocks, where each resource block includes seven symbols and each symbol is represented by 12 modulated subcarriers. The subcarriers are mutually orthogonal having a spacing of 15 kHz. Each subcarrier may be modulated using quadrature phase shift keying (QPSK), 16 quadrature amplitude modulation (16QAM), 64QAM or 256QAM. Multiple resource blocks may be divided among multiple UEs. In order to effectively transmit downlink data, it is desirable for the base station to continually know the characteristics of the channel on each resource block to each UE being served.

Uplink (UL) frames have a similar format but may have fewer subcarriers as uplink transmissions may use single carrier frequency division multiplexing (SC-FDMA). The uplink transmissions may also use OFDMA.

In LTE, aperiodic CSI requests are sent from the base station(s) to the UEs in DCIs. The PDCCH is allocated in the resource blocks by the base station. As described above, a base station may concurrently determine the status of several channels using an aperiodic CSI request. In CA, multiple CSI corresponding to multiple carriers (or serving cells) can be requested by the serving base station in accordance with Table 1. The set of serving base stations for reporting corresponding to CSI request fields '10' and '11' may be configured using a resource control message sent via radio resource control (RRC) signalling.

**Table 1**

| **Value of CSI request field** | **Description** |
|---|---|
| '00' | No aperiodic CSI report is triggered |
| '01' | Aperiodic CSI report is triggered for serving cell C |
| '10' | Aperiodic CSI report is triggered for a 1^{st} set of serving cells configured by higher layer signalling |
| '11' | Aperiodic CSI report is triggered for a 2^{nd} set of serving cells configured by higher layer signalling |

In transmission mode 10, for multi-antenna base stations, multiple CSI reports corresponding to multiple CSI processes on the same serving frequency but on different channels (transmission points) for each base station can be requested by a serving base station in accordance to the Table 2. The set of CSI processes for reporting corresponding to CSI request fields '01', '10' and '11' may be configured using RRC signalling.

**Table 2**

| **Value of CSI request field** | **Description** |
|---|---|
| '00' | No aperiodic CSI report is triggered |
| '01' | Aperiodic CSI report is triggered for a set of CSI process(es) configured by higher layers for serving cell *C* |
| '10' | Aperiodic CSI report is triggered for a 1^{st} set of CSI process(es) configured by higher layer signalling |
| '11' | Aperiodic CSI report is triggered for a 2^{nd} set of CSI process(es) configured by higher layer signalling |

The aperiodic CSI triggering is performed by setting, in the DCI formats 0 or 4, the Modulation and Coding Scheme (MCS) and resource allocation size in such way that the MCS index, denoted as I_{MCS}, is 29 and resource allocation size (number of resource blocks), denoted as N_{PRB}, to be less than x (e.g., x = 4 or 20). The base station sends the DCI in the Physical Downlink Control Channel (PDCCH) or the enhanced PDCCH.

The CSI report includes detailed information regarding the status of channels between a UE and one or more base stations. Each report includes a rank indicator (RI), a precoding matrix indicator (PMI), a precoding type indicator (PTI) and a channel quality indicator (CQI) for each DL channel. In response to an aperiodic CSI request, the UE obtains this information for the requested channel or channels and sends it to the requesting base station. The CSI reports may be encoded by the UE and sent from the UE to the base station in the physical uplink shared channel (PUSCH). As described below, according to the invention the CSI reports are encoded and sent via the PUCCH.

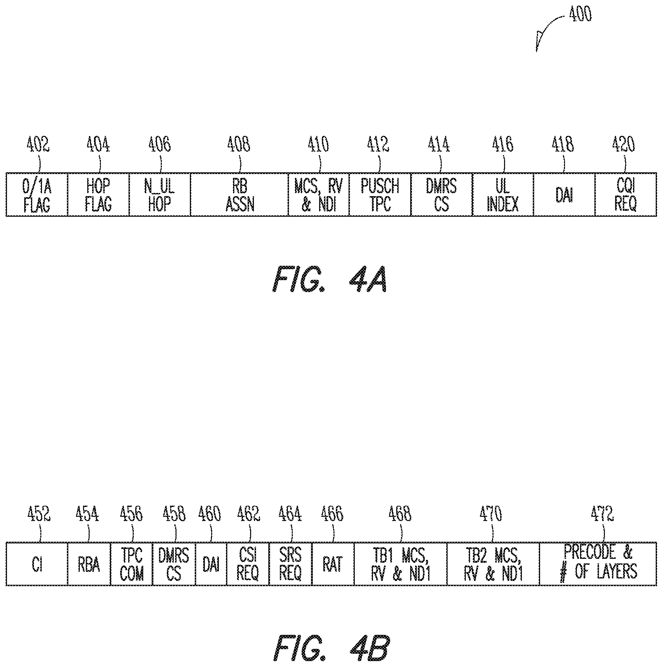

FIGs. 4A and 4B are data diagram showing example channel control messages, in this case, a format 0 DCI and a format 4 DCI, respectively. The format 0 DCI includes a 1 bit flag 402 that differentiates the format 0 DCI from a format 1A DCI, a 1 bit hopping flag 404, a 2 bit hopping resource allocation ( NUL hop) field 406, a resource block assignment field 408 that has between 5 and 13 bits, a 5 bit field 410 containing modulation coding scheme (MCS), redundancy version (RV) and new-data indicator (NDI) subfields a 2 bit power control command (TPC) field 412 for the physical uplink shared channel (PUSCH), a 3 bit cyclic shift field 414 for the demodulation reference (RM RS) signal, a 2 bit uplink (UL) index field 416, a 2 bit downlink assignment index (DAI) field 418 and a 1 or 2 bit CSI request field. The UL index and DAI fields are only used for time division duplex (TTD) transmissions.

The format 4 DCI includes a carrier indicator field 452 that has between 0 and 3 bits, a resource block assignment field 545 having between 5 and 13 bits, a 2 bit TPC power control field 456, a 3 bit cyclic shift for DM RS and orthogonal cover code (OCC) index field 458, a 1 or 2 bit CSI request field 462, a 2 bit sounding reference signal (SRS) request field 464, a 1 bit resource allocation type field 466, a 6 bit field 468 containing a first sub field for the modulation coding scheme and redundancy version (MCS and RV) for transport block 1 (TB1) and a second subfield containing the NDI for TB1, a 6 bit field 470 containing the MCS, RV and NDI for transport block 2 (TB2), and a field 472 having between 0 and 7 bits that defines the precoding index and number of layers.

In the case of aperiodic CSI feedback, the UE can send a DCI including a CSI request in every sub-frame. This gives the network flexibility in assigning the resources to the UE for CSI transmission. A drawback is that there may be additional overhead associated with the transmission of the triggering DCIs on PDCCH or enhanced PDCCH (EPDCCH) in every sub-frame. In a Full Dimension Multiple Input Multiple Output (FD-MIMO) system with many UEs the overhead may be significant because each DCI may have as many as 45 bits. Thus, the DCI including the CSI request for each UE may occupy 45 bits in each downlink sub-frame. Some methods to reduce the control channel overhead should be considered.

According to the invention, multi-shot CSI reporting is provided. In accordance with various implementations, a UE receives a CSI request in DCI or MAC CE that activates multi-shot CSI calculation and reporting. The number of reports and/or periodicity can be configured using higher layer signalling such as RRC signalling. In the other embodiments, the number of CSI reports can be also determined by another DCI or MAC CE which releases the multi-shot CSI reporting at the UE. The UE is configured to encode and send the CSI reports by signalling data in the DCI containing the aperiodic CSI request. As an alternative to sending the DCI containing the CSI request in the PDCCH, the base station sends, according to the invention, CSI requests using a MAC CE.

In various embodiments, the base station can configure the UE with multi-shot aperiodic CSI reporting using a resource control message sent via higher layer signalling such as RRC signalling and the like. This signalling may include the index, I, of an initial sub-frame into which the CSI report is to be inserted, the configuration of CSI reporting periodicity, P, and the number of CSI report instances, N, a bit map, and/or reporting parameter threshold values. After the UE has been configured, the multi-shot aperiodic CSI reporting is triggered by the reception of a DCI (e.g., DCI Format 0 or 4) with a non-zero CSI request field. Responsive to receiving this CSI request, the UE performs CSI calculation and reporting of CSI for N uplink sub-frames with periodicity of P sub-frames.

In other embodiments, the number of CSI reports can be determined by another DCI, which releases the multi-shot aperiodic CSI reporting at the UE. In yet other embodiments, the UE may be configured by the DCI or MAC CE without using any higher level signalling.

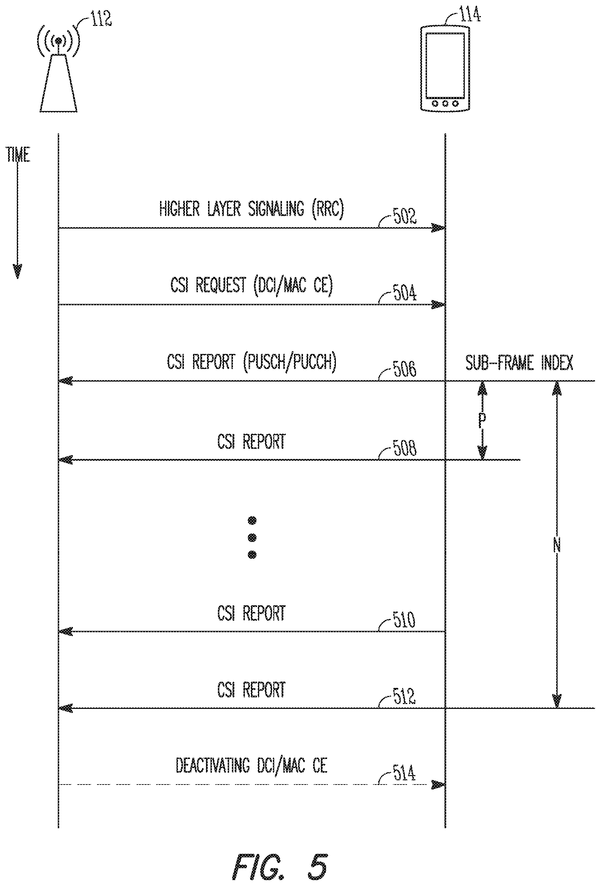

FIG. 5 shows examples of these embodiments for a Frequency Division Duplex (FDD) system. The embodiment is described with reference to a single base station 112 and a single UE 114. It is contemplated, however, that it may be implemented in systems having multiple base stations and multiple UEs. When a UE has multiple serving base stations, any one of the base stations can receive a CSI report including the status of the channels between the UE and the other base stations as described above with reference to Tables 1 and 2.

At 502, the base station 112 may configure the UE 114 using higher-layer signalling such as RRC signalling. For a single aperiodic CSI request, the base station 112 may signal an initial sub-frame index, I, identifying the sub-frame in which the UE is to insert and encode the CSI report. For multi-shot CSI requests, the sub-frame index may indicate when the first CSI report is to be sent and the base station 112 may further configure the UE device in several ways for multi-shot CSI reports. First, the base station may configure the UE with only a period value P. Second, the base station may configure the UE with both a period value P and a number of CSI reports N. Third, the base station may configure the UE with a bit-map where each bit corresponds to a sub-frame in which the CSI report is to be generated, inserted and encoded. Fourth, the base station may send a period value P and one or more parameters to the UE describing threshold values (maximum and/or minimum) for one or more of the values in the CSI report. Using the higher level signalling, the base station may also assign the serving cells (component carriers) for the UE to the first and second sets, as described above with reference to Table 1 or it may assign the CSI processes for the different layers to sets 1 and 2 as described above with reference to Table 2. The higher-layer signalling may also configure the UE to insert and encode the CSI reports in the physical uplink control channel (PUCCH) rather than the PUSCH to limit the impact of the increased reporting on the transmission of uplink data. Upon receiving the RCC signalling, the UE 114 extracts the sub-frame index, the values P and N, the bit map and/or the parameter threshold values and uses these values to configure processing of the CSI reports.

The remainder of FIG. 5 illustrates the first two alternatives described above. At 504, the base station 112 sends a DCI or MAC CE with a CSI request. Depending on how the UE has been configured, it may respond by inserting a first CSI report 506 into the sub-frame identified by the initial sub-frame index, I, and then by inserting subsequent CSI reports 508, 510 and 512 with a period of P sub-frames until a deactivating DCI or MAC CE 514 is received. Such a deactivating DCI may, for example, have a non-zero DCI field, but zero-valued Transmit Power Control (TPC) command and Demodulation reference signal (DM-RS) shift fields. According to the invention, the MAC CE is sent to de-activate CSI reporting. According to the second alternative, when the UE has been configured to send N CSI reports, the UE may insert and encode the subsequent CSI reports 508, 510 and 512 into sub-frames with a period of P until N reports have been sent. In this alternative, there is no deactivation DCI, as indicated by 514 being a dashed line.

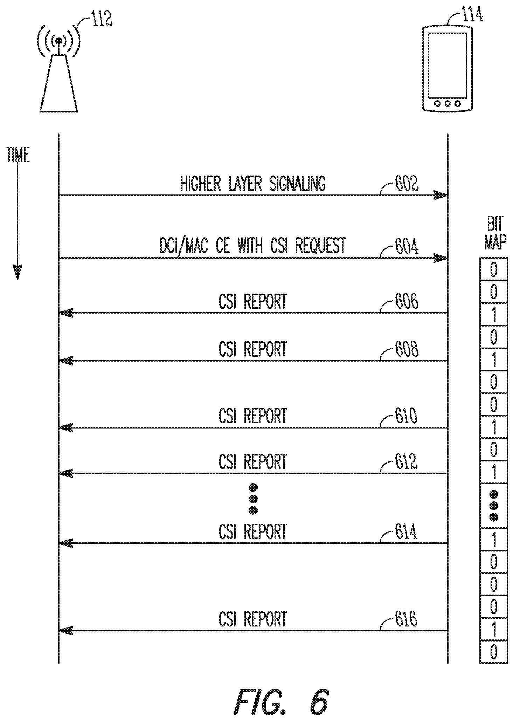

FIG. 6 illustrates the third alternative, described above, in which the CSI reports are generated and transmitted in sub-frames determined from a bit-map. In the third alternative, at 602, the base station 112, using higher level signalling, configures the UE with a bit-map 620 describing die sub-frames in which a CSI report is to be inserted. As shown in FIG. 6, the CSI request received at 604 aligns the bit-map 620 with the sub-frames such that the UE inserts a CSI report for each sub-frame 606, 608, 612, 614, 616 and 618 corresponding to a "1" valued bit in the bitmap 620. No CSI report is sent for sub-frames corresponding to "0" valued bits in the bitmap. The bit-map 620 may be retained by the UE and used for subsequent multi-shot CSI reports.

FIG 6 may also describe the fourth alternative in which the base station, using the higher level signalling, has configured the UE with threshold values for the data in the CSI report. In this alternative, the UE may insert, encode and send a first CSI report 606 in response to receiving a CSI request. The UE then calculates die CSI values (e.g. RI, PMI, PT1 and CQI) for each DL channel but only inserts reports in sub-frames 606, 608, 612, 614, 616 and 618, in which at least one of the calculated CSI values is greater than a maximum threshold value or less than a minimum threshold value. This alternative may be combined with the alternatives shown in FIG. 5 so that the UE only calculates the CSI values for every P^{th} sub-frame and may be limited in the number of CSI reports it sends either by the value N or by a deactivating DCI or MAC CE.

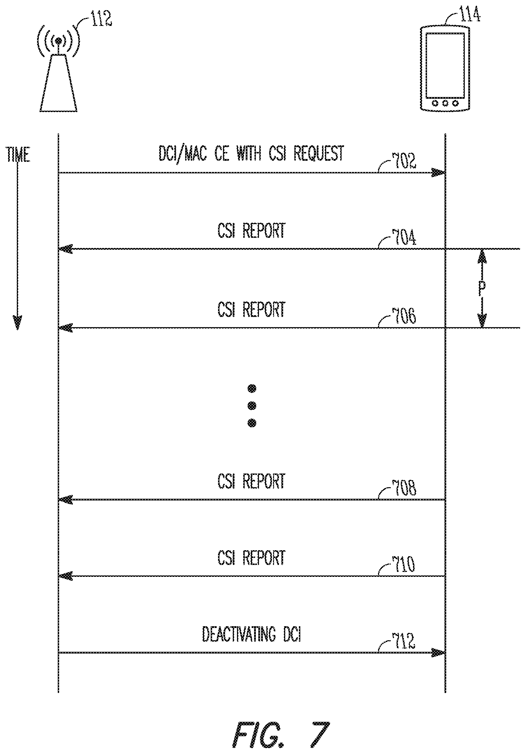

FIG. 7 shows another implementation which does not use higher-level signalling. In this embodiment, the base station configures the UE using the TPC and DM-RS cyclic shift fields. In this embodiment, the base station may configure the UE by sending a DCI having a non-zero valued CSI field, a zero-valued TPC field and a non-zero value in the DM-RS cyclic shift field. In one implementation, die non-zero value in the DM-RS field may represent the period value P so that a periodicity of between 1 and 7 sub-frames can be specified. After the CSI request is received at 702, the UE calculates, inserts and encodes CSI reports into sub-frames 704, 706, 708 and 710 with a period of P until a deactivating DCI, having a non-zero CSI field and zero-valued TPC and DM-RS cyclic shift fields, is received at 712.

The foregoing description of one or more implementations provides illustration and description, but is not intended to be exhaustive or to limit the scope of the embodiments to the precise form disclosed. The scope of protection is solely limited by the appended claims.

## Claims

1. An apparatus (250) of a user equipment, UE (114), the apparatus (250) comprising:
an interface (262); and
processing circuitry (258) in communication with the interface (262) and arranged to:
decode a configuration to send multiple channel state information, CSI, reports to a base station (112), wherein the configuration specifies a CSI reporting periodicity on the physical uplink control channel, PUCCH;
decode a medium access control, MAC, control element, CE, the MAC CE including a request to activate the multiple CSI reports via the PUCCH, each CSI report of the multiple CSI reports describing channel status for a channel between the base station (112) and the UE (114);
transmit (506-512) the multiple CSI reports in response to the MAC CE;
stop transmitting the multiple CSI reports responsive to receiving a second MAC CE (514) deactivating the multiple CSI reports;
and
for each of the multiple CSI reports:
generate the respective CSI report according to the configuration;
and
encode the respective CSI report for transmission to the base station (112) on the PUCCH.

2. The apparatus (250) of claim 1, wherein said decoding the configuration includes:
decoding a resource control message to obtain an integer initial sub-frame index, I, and an integer periodicity value, P;
identifying a sub-frame having the index I as a first sub-frame of a plurality of sub-frames into which one of the CSI reports is to be inserted; and
identifying each subsequent sub-frame of the plurality of sub-frames as separated from an immediately previously identified sub-frame by P-1 sub-frames.

3. The apparatus (250) of claim 1, wherein the processing circuitry (258) is further arranged to:
decode a resource control message to obtain a threshold value for channel status data reported in the multiple CSI reports, wherein generating the multiple CSI reports is based on comparing the channel status data to the threshold value.

4. The apparatus (250) of claim 1, wherein said decoding the configuration includes:
extracting, from the channel control message, an integer periodicity value P;
identifying a first sub-frame of a plurality of sub-frames into which one of the multiple CSI reports is to be inserted; and
identifying each subsequent sub-frame of the plurality of sub-frames as separated from an immediately previously identified sub-frame by P-1 sub-frames.

5. A non-transitory computer readable medium including program instructions that, when executed by processing circuitry (258) of user equipment, UE (114), are configured to cause the processing circuitry (258) to:
decode a configuration to send multiple channel state information, CSI, reports to a base station (112), wherein the configuration specifies a CSI reporting periodicity on the physical uplink control channel, PUCCH;
decode a medium access control, MAC, control element, CE to activate the multiple CSI reports via the PUCHH, each CSI report of the multiple CSI reports describing channel status of a channel between a base station (112) and the UE (114);
transmit the multiple CSI reports in response to the MAC CE;
stop transmitting the multiple CSI reports response to receiving a second MAC CE deactivating the multiple CSI reports;
and
for each of the multiple CSI reports:
generate the respective multiple CSI report according to the configuration;
and
encode the respective CSI report for transmission to the base station (112) on the PUCCH.

6. The non-transitory computer readable medium of claim 5, wherein said decoding the configuration includes:
decoding the resource control message to obtain the parameters including an integer initial sub-frame index, I, and an integer periodicity value, P;
identifying a sub-frame having the index I as a first sub-frame of a plurality of sub-frames into which one of the multiple CSI reports is to be inserted; and
identifying each subsequent sub-frame of the plurality of sub-frames as separated from an immediately previously identified sub-frame by P-1 sub-frames.

## Patentansprüche

1. Vorrichtung (250) einer Benutzervorrichtung (user equipment), UE (114), wobei die Vorrichtung (250) Folgendes umfasst:
eine Schnittstelle (262); und
eine Verarbeitungsschaltung (258) in Kommunikation mit der Schnittstelle (262) und angeordnet zum:
Decodieren einer Konfiguration zum Senden mehrerer Berichte von Kanalzustandsinformationen, CSI, an eine Basisstation (112), wobei die Konfiguration eine CSI-Berichtsperiodizität auf dem physikalischen Uplink-Steuerkanal, PUCCH, spezifiziert;
Decodieren eines Medienzugriffssteuerungs-Steuerelements, MAC-CE, wobei das MAC-CE eine Anforderung zum Aktivieren der mehreren CSI-Berichte über den PUCCH beinhaltet, wobei jeder CSI-Bericht der mehreren CSI-Berichte einen Kanalstatus für einen Kanal zwischen der Basisstation (112) und der UE (114) beschreibt;
Senden (506-512) der mehreren CSI-Berichte als Reaktion auf das MAC-CE;
Stoppen des Sendens der mehreren CSI-Berichte als Reaktion auf das Empfangen eines zweiten MAC-CE (514), das die mehreren CSI-Berichte deaktiviert; und
für jeden der mehreren CSI-Berichte:
Erzeugen des jeweiligen CSI-Berichts gemäß der Konfiguration;
und
Codieren des jeweiligen CSI-Berichts zur Übertragung an die Basisstation (112) auf dem PUCCH.

2. Vorrichtung (250) nach Anspruch 1, wobei das Decodieren der Konfiguration Folgendes beinhaltet:
Decodieren einer Ressourcensteuernachricht, um einen ganzzahligen anfänglichen Unterrahmenindex, I, und einen ganzzahligen Periodizitätswert, P, zu erhalten;
Identifizieren eines Unterrahmens mit dem Index I als einen ersten Unterrahmen einer Vielzahl von Unterrahmen, in den einer der CSI-Berichte einzufügen ist; und
Identifizieren jedes nachfolgenden Unterrahmens der Vielzahl von Unterrahmen als von einem unmittelbar zuvor identifizierten Unterrahmen durch P-1 Unterrahmen getrennt.

3. Vorrichtung (250) nach Anspruch 1, wobei die Verarbeitungsschaltung (258) ferner angeordnet ist zum:
Decodieren einer Ressourcensteuernachricht, um einen Schwellenwert für Kanalstatusdaten zu erhalten, die in den mehreren CSI-Berichten berichtet werden, wobei das Erzeugen der mehreren CSI-Berichte auf dem Vergleichen der Kanalstatusdaten mit dem Schwellenwert basiert.

4. Vorrichtung (250) nach Anspruch 1, wobei das Decodieren der Konfiguration Folgendes beinhaltet:
Extrahieren eines ganzzahligen Periodizitätswerts P aus der Kanalsteuernachricht;
Identifizieren eines ersten Unterrahmens einer Vielzahl von Unterrahmen, in den einer der mehreren CSI-Berichte einzufügen ist; und
Identifizieren jedes nachfolgenden Unterrahmens der Vielzahl von Unterrahmen als von einem unmittelbar zuvor identifizierten Unterrahmen durch P-1 Unterrahmen getrennt.

5. Nichtflüchtiges computerlesbares Medium, das Programmanweisungen beinhaltet, die bei Ausführung durch eine Verarbeitungsschaltung (258) einer Benutzervorrichtung, UE (114), konfiguriert sind, um die Verarbeitungsschaltung (258) zu Folgendem zu veranlassen:
Decodieren einer Konfiguration zum Senden mehrerer Berichte von Kanalzustandsinformationen, CSI, an eine Basisstation (112), wobei die Konfiguration eine CSI-Berichtsperiodizität auf dem physikalischen Uplink-Steuerkanal, PUCCH, spezifiziert;
Decodieren eines Medienzugriffssteuerungs-Steuerelements, MAC-CE, zum Aktivieren der mehreren CSI-Berichte über den PUCCH, wobei jeder CSI-Bericht der mehreren CSI-Berichte einen Kanalstatus eines Kanals zwischen einer Basisstation (112) und der UE (114) beschreibt;
Senden der mehreren CSI-Berichte als Reaktion auf das MAC-CE;
Stoppen des Sendens der mehreren CSI-Berichte als Reaktion auf das Empfangen eines zweiten MAC-CE, das die mehreren CSI-Berichte deaktiviert;
und
für jeden der mehreren CSI-Berichte:
Erzeugen des jeweiligen mehreren CSI-Berichts gemäß der Konfiguration;
und
Codieren des jeweiligen CSI-Berichts zur Übertragung an die Basisstation (112) auf dem PUCCH.

6. Nichtflüchtiges computerlesbares Medium nach Anspruch 5, wobei das Decodieren der Konfiguration Folgendes beinhaltet:
Decodieren der Ressourcensteuernachricht, um die Parameter zu erhalten, die einen ganzzahligen anfänglichen Unterrahmenindex, I, und einen ganzzahligen Periodizitätswert, P, beinhalten;
Identifizieren eines Unterrahmens mit dem Index I als einen ersten Unterrahmen einer Vielzahl von Unterrahmen, in den einer der mehreren CSI-Berichte einzufügen ist; und
Identifizieren jedes nachfolgenden Unterrahmens der Vielzahl von Unterrahmen als von einem unmittelbar zuvor identifizierten Unterrahmen durch P-1 Unterrahmen getrennt.

## Revendications

1. Un appareil (250) d'un équipement utilisateur, UE (114), l'appareil (250) comprenant :
une interface (262) ; et
une circuiterie de traitement (258) en communication avec l'interface (262) et conçue pour :
décoder une configuration pour envoyer de multiples rapports d'information d'état de canal, CSI, à une station de base (112), dans lequel la configuration spécifie une périodicité de rapport de CSI sur le canal physique de contrôle de liaison montante, PUCCH ;
décoder un élément de contrôle, CE, de contrôle d'accès au support, MAC, le CE MAC comportant une requête pour activer les multiples rapports de CSI via le PUCCH, chaque rapport de CSI des multiples rapports de CSI décrivant un état de canal pour un canal entre la station de base (112) et l'UE (114) ;
transmettre (506-512) les multiples rapports de CSI en réponse au CE MAC ;
interrompre la transmission des multiples rapports de CSI en réponse à la réception d'un deuxième CE MAC (514) désactivant les multiples rapports de CSI ;
et, pour chacun des multiples rapports de CSI :
générer le rapport de CSI respectif selon la configuration ; et
coder le rapport de CSI respectif pour transmission à la station de base (112) sur le PUCCH.

2. L'appareil (250) selon la revendication 1, dans lequel ledit décodage de la configuration comporte :
le décodage d'un message de contrôle de ressources pour obtenir un indice entier de sous-trame initial, I, et une valeur entière de périodicité, P ;
l'identification d'une sous-trame ayant l'indice I comme étant une première sous-trame d'une pluralité de sous-trames dans laquelle un des rapports de CSI doit être inséré ; et
l'identification de chaque sous-trame subséquente de la pluralité de sous-trames comme étant séparée de P-1 sous-trames par rapport à une sous-trame identifiée immédiatement précédemment.

3. L'appareil (250) selon la revendication 1, dans lequel la circuiterie de traitement (258) est conçue en outre pour :
décoder un message de contrôle de ressources pour obtenir une valeur de seuil pour des données d'état de canal rapportées dans les multiples rapports de CSI, dans lequel la génération des multiples rapports de CSI est basée sur la comparaison des données d'état de canal à la valeur de seuil.

4. L'appareil (250) selon la revendication 1, dans lequel ledit décodage de la configuration comporte :
l'extraction, à partir du message de contrôle de canal, d'une valeur entière de périodicité, P ;
l'identification d'une première sous-trame d'une pluralité de sous-trames dans laquelle un des multiples rapports de CSI doit être inséré ; et
l'identification de chaque sous-trame subséquente de la pluralité de sous-trames comme étant séparée de P-1 sous-trames par rapport à une sous-trame identifiée immédiatement précédemment.

5. Un support non transitoire lisible par calculateur comportant des instructions de programme qui, quand elles sont exécutées par une circuiterie de traitement (258) d'un équipement utilisateur, UE (114), sont configurées pour amener la circuiterie de traitement (258) à :
décoder une configuration pour envoyer de multiples rapports d'information d'état de canal, CSI, à une station de base (112), dans lequel la configuration spécifie une périodicité de rapport de CSI sur le canal physique de contrôle de liaison montante, PUCCH ;
décoder un élément de contrôle, CE, de contrôle d'accès au support, MAC, pour activer les multiples rapports de CSI via le PUCCH, chaque rapport de CSI des multiples rapports de CSI décrivant un état de canal pour un canal entre une station de base (112) et l'UE (114) ;
transmettre les multiples rapports de CSI en réponse au CE MAC ;
interrompre la transmission des multiples rapports de CSI en réponse à la réception d'un deuxième CE MAC désactivant les multiples rapports de CSI ; et
pour chacun des multiples rapports de CSI :
générer le rapport de CSI respectif selon la configuration ; et
coder le rapport de CSI respectif pour transmission à la station de base (112) sur le PUCCH.

6. Le support non transitoire lisible par calculateur selon la revendication 5, dans lequel ledit décodage de la configuration comporte :
le décodage du message de contrôle de ressources pour obtenir les paramètres comportant un indice entier de sous-trame initial, I, et une valeur entière de périodicité, P ;
l'identification d'une sous-trame ayant l'indice I comme étant une première sous-trame d'une pluralité de sous-trames dans laquelle un des multiples rapports de CSI doit être inséré ; et
l'identification de chaque sous-trame subséquente de la pluralité de sous-trames comme étant séparée de P-1 sous-trames par rapport à une sous-trame identifiée immédiatement précédemment.
